# EUROPÄISCHE PATENTSCHRIFT

(11) **EP 0 792 900 B1**
(45) Veröffentlichungstag und Bekanntmachung des Hinweises auf die Patenterteilung: **22.10.2003**
(21) Anmeldenummer: 97103058.0
(22) Anmeldetag: 26.02.1997
(51) Int. Cl.: C08G 18/75, C08G 18/08, C03C 25/10

(54) **Verwendung von ionischen und nichtionischen wässrigen Polyurethandispersionen als Bindemittel für Glasfaserschlichten sowie diese Dispersionen**
Use of ionic and non-ionic aqueous polyurethane dispersions as a binder for the fixing of glass fibres as well as these dispersions
Utilisation de dispersions aqueuses de polyuréthane ioniques ou non-ioniques pour l'encollage de fibres de verre et ces dispersions-mêmes

(30) Priorität: 01.03.1996 DE 19607853; 26.03.1996 DE 19611850
(43) Veröffentlichungstag der Anmeldung: 03.09.1997
(73) Patentinhaber: BAYER AG, 51368 Leverkusen (DE)
(72) Erfinder: Blum, Harald, Dr., 51375 Leverkusen (DE); Naujoks, Karin, Dipl.-Chem.-Ing., 51399 Burscheid (DE); Reiff, Helmut, Dr., 51375 Leverkusen (DE); Wilmes, Oswald, Dr., 51061 Köln (DE); Meier-Westhues, Hans-Ulrich, Dr., 51379 Leverkusen (DE); Audenaert, Raymond, Dr., 9220 Hamme (BE)

(56) Entgegenhaltungen:
- EP-A- 0 140 323
- EP-A- 0 505 875
- EP-A- 0 729 991
- DE-A- 19 506 736
- DE-A- 19 517 185
- US-A- 5 157 074

## Beschreibung

Die Erfindung betrifft die Verwendung von ionischen und nichtionischen wässrigen Polyurethandispersionen auf Basis von 1-Methyl-2,4- und/oder -2,6-diisocyanatocyclohexan als Bindemittel für Glasfaserschlichten sowie spezielle ionische und nichtionische wässrige Polyurethandispersionen auf Basis von 1-Methyl-2,4- und/oder -2,6-diisocyanatocyclohexan.

Die Erfindung betrifft weiterhin wäßrige Bindemittelkombinationen auf Basis derartiger Dispersionen und üblichen Vernetzerharzen, ebenfalls zur Verwendung zum Schlichten von Glasfasern.

Die Polyurethandispersionen, die in Betracht kommen, sind bekannt, z.B. DE-A 14 95 745, 26 45 779, 39 03 538, 41 37 661 und 42 19 418, Kunstoffhandbuch Bd. 7, 3.Auflage, 1993, S. 30 und 31, EP-A-0 505 875, sowie US 5,157,074.

Weitere Übersichtsartikel findet man unter D. Dieterich, Angew. Makromol. Chem. 98 (1981) 133 sowie H. Reiff, D. Dieterich Angew. Makromol. Chem. 26 (1972) 85.

Die in diesen Veröffentlichungen beschriebenen wäßrigen Polyurthandispersionen führen in der Regel zu Lacken oder Beschichtungen mit einem hochwertigen Eigenschaftsniveau, die je nach Zusammensetzung für unterschiedliche Anwendungen verwendet werden können.

Jetzt wurde gefunden, daß wäßrige Polyurethandispersionen, die als wesentliche Aufbaukomponente 1-Methyl-2,4- und/oder -2,6-diisocyanatocyclohexan in über Urethan- und gegebenenfalls über Harnstoffgruppen eingebauter Form enthalten neben einem hochwertigen Eigenschaftsniveau eine im Vergleich zu den bekannten Systemen besonders gute Viskositätsstabilität bei der Lagerung aufweisen.

Weiterhin wurde gefunden, daß wäßrige Polyurethandispersionen, die als wesentliche Aufbaukomponente 1-Methyl-2,4- und/oder -2,6-diisocyanatocyclohexan in über Urethan- und gegebenenfalls über Harnstoffgruppen eingebauter Form enthalten, bei ihrer Verwendung als Bindemittel für Glasfaserschlichten hervorragende mechanische Daten der glasfaserverstärkten Kunststoffe ergeben, wobei gleichzeitig eine deutlich verbesserte Verarbeitbarkeit bei Herstellung und Verwendung der geschlichteten Glasfasern beobachtet wurde.

Ein weiterer Vorteil der erfindungsgemäß geschlichteten Glasfasern ist deren niederes Schüttvolumen.

Gegenstand der Erfindung ist die Verwendung der weiter unter beschriebenen wässrigen Polyurethandispersionen als Bindemittel für Glasfaserschlichten.

Gegenstand der Erfindung sind weiterhin 20 bis 60 gew.-%ige wäßrige Polyurethandispersionen mit einer Viskosität bei 23°C von 10 bis 20 000 mPa.s und einem pH-Wert von 5,5 bis 8,5 mit einem Molekulargewicht Mw von 5000 bis 500 000, vorzugsweise von 10000 bis 300000 und einem Gehalt an Urethangruppen (berechnet als -NHCO-O-, Molekulargewicht = 59) von 2,5 bis 15 Gew.-%, und eine Hydroxylzahl von < 20 mg KOH/g wobei das Polyurethan ein Umsetzungsprodukt darstellt von
a) 50 bis 91 Gew.-% einer Polyhydroxylkomponente, bestehend aus mindestens einer Polyhydroxylkomponente des Hydroxylzahlbereichs 15 bis 350,
b) 7 bis 45 Gew.-% einer Polyisocyanat-Komponente, bestehend zumindest zu 50 Gew.-% aus 1-Methyl-2,4- und/oder -2,6-diisocyanatocyclohexan und zum Rest aus anderen organischen Polyisocyanaten des Molekulargewichts bereichs 140 bis 1 500
   und
c) 0 bis 12 Gew.-% einer (potentiell) anionischen Aufbaukomponente, bestehend aus mindestens einer Verbindung mit mindestens einer gegenüber NCO-Gruppen reaktionsfähigen Gruppe und mindestens einer, gegebenenfalls zumindest teilweise neutralisiert vorliegenden, zur Salzbildung befähigten Gruppe, wobei Sulfonat- und Phosphat- Gruppen bevorzugt aber Carboxylat-Gruppen modifizierte wässrige Polyurethane ausgenommen sind
   und gegebenenfalls
d) 0 bis 15 Gew.-% einer nichtionisch-hydrophilen Aufbaukomponente, bestehend aus mindestens einer im Sinne der Isocyanat-Additionsreaktion mono- bis tetrafunktionellen, mindestens eine hydrophile Polyetherkette aufweisenden Verbindung
   und/oder gegebenenfalls
e) 0 bis 30 Gew.-% an anderen, von den Komponenten a), c) und d) verschiedenen Aufbaukomponenten mit gegenüber Isocyanatgruppen reaktionsfähigen Wasserstoffatomen des Molekulargewichtsbereichs 62 bis 2 500,
wobei sich die genannten Prozentangaben zu 100 ergänzen, jedoch unter der Vorraussetzung daß entweder c) oder d) nicht Null sein kann.

Gegenstand der Erfindung sind auch die oben beschriebenen wäßrigen Polyurethandispersionen in denen das darin enthaltene Polyurethan das Umsetzungsprodukt darstellt aus
a) 68 bis 88 Gew.-% einer Polyhydroxylverbindung
b) 10 bis 30 Gew.-% einer Polyisocyanat-Komponente, bestehend zumindest zu 50 Gew.-% aus 1-Methyl-2,4- und/oder -2,6-diisocyanatocyclohexan und zum Rest aus anderen organischen Polyisocyanaten des Molekulargewichtsbereichs 140 bis 1 500
   und
c) 0 bis 8 Gew.-% einer (potentiell) anionischen Aufbaukomponente, bestehend aus mindestens einer Verbindung mit mindestens einer gegenüber NCO-Gruppen reaktionsfähigen Gruppe und mindestens einer, gegebenenfalls zumindest teilweise neutralisiert vorliegenden, zur Salzbildung befähigten Gruppe wobei Carboxylat modifizierte wässrige Polyurethane ausgenommen und Sulfonat modifizierte wässrige Polyurethane bevorzugt sind
   und gegebenenfalls
d) 0 bis 15 Gew.-% einer nichtionisch-hydrophilen Aufbaukomponente, bestehend aus mindestens einer im Sinne der Isocyanat-Additionsreaktion mono- bis tetrafunktionellen, mindestens eine hydrophile Polyetherkette aufweisenden Verbindung
   und gegebenenfalls
e) 0 bis 10 Gew.-% an anderen, von den Komponenten a), c) und d) verschiedenen Aufbaukomponenten mit gegenüber Isocyanatgruppen reaktionsfähigen Wasserstoffatomen des Molekulargewichtsbereichs 62 bis 1200,
wobei sich die genannten Prozentangaben zu 100 ergänzen, jedoch unter der Vorraussetzung daß entweder c) oder d) nicht Null sein kann.

Gegenstand der Erfindung sind schließlich auch wäßrige Bindemittelkombinationen sowie deren Verwendung als Bindemittel für Glasfaserschlichten, die im wesentlichen bestehen aus
A) einer wäßrigen Dispersion eines Polyurethans der oben genannten Art und
B) einer Härterkomponente, ausgewählt aus der Gruppe bestehend aus
   B1) hydrophoben Polyisocyanaten mit einer Viskosität bei 23°C von 25 bis 5 000 mPa.s und einem NCO-Gehalt von 5 bis 26 Gew.-%,
   B2) eingebaute hydrophile Polyetherketten enthaltenden, hydrophilen Polyisocyanaten mit einem NCO-Gehalt von 4 bis 24 Gew.-%,
   B3) Gemischen der unter B1) und B2) genannten Polyisocyanate,
   B4) ggf. in Wasser dispergierte Polyisocyanate der unter B1) bis B3) genannten Art mit Blockierungsmitteln für Isocyanatgruppen blockierten Isocyanatgruppen,
   B5) Aminovernetzerharzen und
   B6) Gemischen der unter B4) und B5) genannten Vernetzerharze.

Die erfindungsgemäßen wäßrigen Polyurethandispersionen weisen vorzugsweise einen Festkörpergehalt von 30 bis 60 Gew.-%, eine Viskosität bei 23°C von 30 bis 5 000 mPa.s und einen pH-Wert von 5 bis 9 auf. Die oben gemachten Angaben bezüglich des pH-Wertes bezieht sich auf die nach Verdünnen mit Wasser auf einen Festkörpergehalt von 10 % ermittelten Werte.

Die in der erfindungsgemäßen Dispersion vorliegenden Polyurethane weisen folgende Kenndaten auf:

Das nach der Gelpermeationschromatographie unter Verwendung von Polystyrol als geeichtem Standard bestimmbare Molekulargewicht Mw (Gewichtsmittel) liegt bei
5 000 bis 500 000, vorzugsweise 10 000 bis 300 000.

Die Hydroxylzahl liegt bei <20 mg KOH/g Substanz.

Der Gehalt an zumindest teilweise neutralisiert vorliegenden sauren Gruppen der oben genannten Art entspricht einer Säurezahl von 7 bis 70, vorzugsweise 10 bis 45 mg KOH/g Substanz. Der Neutralisationsgrad dieser Gruppen liegt bei 20 bis 100, vorzugsweise 50 bis 100 %.

Der Gehalt an Urethangruppen (berechnet als -NH-CO-O- Molekulargewicht = 59) liegt bei 2,5 bis 15, vorzugsweise 5 bis 12,5 Gew.-%.

Die in Wasser dispergiert vorliegenden Polyurethane stellen zumindest teilweise in der Salzform vorliegende, nach bekannten Methoden hergestellte Umsetzungsprodukte von
a) 50 bis 91, vorzugsweise 65 bis 90 und insbesondere 68 bis 88 Gew.-% einer Polyhydroxylverbindung,
b) 7 bis 45, vorzugsweise 10 bis 30 und insbesondere 8 bis 23 Gew.-% einer Polyisocyanatkomponente der nachstehend näher beschriebenen Art
   und
c) 0 bis 12, vorzugsweise 3 bis 9 und insbesondere 4 bis 8 Gew.-% einer (potentiell) anionischen Aufbaukomponente der nachstehend näher beschriebenen Art
   und gegebenenfalls
d) 0 bis 15, vorzugsweise 0 bis 8 Gew.-% an nichtionisch-hydrophilen Aufbaukomponenten der nachstehend näher beschriebenen Art
   und/oder gegebenenfalls
e) 0 bis 30, vorzugsweise 0 bis 10 und insbesondere 0 bis 7,5 Gew.-% an anderen, von den Komponenten a), c) und d) verschiedenen Aufbaukomponenten des Molekulargewichtsbereichs 62 bis 2 500, vorzugsweise 62 bis 1 200 mit gegenüber Isocyanatgruppen reaktionsfähigen Gruppen dar.

Bei den Polyhydroxylkomponenten a) handelt es sich beispielsweise um Polyesterpolyole (z.B. Ullmanns Encyklopädie der technischen Chemie, 4. Auflage, Band 19, S. 62-65).

Bevorzugt werden Polyesterpolyole eingesetzt, die durch Umsetzung von zweiwertigen Alkoholen a3) mit zweiwertigen Carbonsäuren erhalten werden. Anstelle der freien Polycarbonsäuren können auch die Polycarbonsäureanhydride oder entsprechende Polycarbonsäureester von niederen Alkoholen oder deren Gemische zur Herstellung der Polyesterpolyole verwendet werden. Die Polycarbonsäuren können aliphatisch, cycloaliphatisch, aromatisch, ggf. substituiert, gesättigt oder ungesättigt sein.

Die zu den Polyesterpolyolen führende Umsetzung erfolgt gegebenenfalls unter Zuhilfenahme von üblichen Veresterungskatalysatoren, vorzugsweise nach dem Prinzip einer Schmelz- oder Azeotropkondensation innerhalb des Temperaturbereichs von 140 bis 240°C.

Die Polycarbonsäuren können anteilig Monocarbonsäuren a1), sowie Dicarbonsäuren bzw. Polycarbonsäuren a2) enthalten.

Bei den Ausgangskomponenten a1) handelt es sich um eine Monocarbonsäurekomponente, die zumindest aus einer Monocarbonsäure des Molekulargewichtsbereichs von 112 bis 340 besteht. Geeignete Monocarbonsäuren sind z.B. Benzoesäure, tert.-Butylbenzoesäure, Hexahydrobenzoesäure, gesättigte Fettsäuren, z.B. 2-Ethylhexansäure, Isononansäure, Kokosölfettsäure, hydrierte technische Fettsäuren bzw. Fettsäuregemische, Dekansäure, Dodekansäure, Tetradekansäure, Stearinsäure, Palmitinsäure, Docosansäure (Behensäure), ungesättigte Fettsäuren, wie Sojaölfettsäure, Ricinusölfettsäure, Sorbinsäure, Erdnußölfettsäure, Konjuenfettsäure, Tallölfettsäure, Sonnenblumenfettsäure, Safflorölfettsäure sowie Gemische dieser oder anderer Monocarbonsäuren.

Bei der Ausgangskomponente a2) handelt es sich um Di-, Tri- und/oder Tetracarbonsäuren bzw. deren Anhydride des Molekulargewichtsbereichs 98 bis 840. Geeignet sind z.B. Phthalsäure-(anhydrid), Isophthalsäure, Terephthalsäure, Tetrahydrophthalsäure(anhydrid), Hexahydrophthalsäure(anhydrid), Maleinsäure(anhydrid), Bernsteinsäure(anhydrid), Fumarsäure, Adipinsäure, Sebacinsäure, Azelainsäure, Dimerfettsäure, Trimerfettsäure, Trimellithsäure(anhydrid), Butantetracarbonsäure und Gemische dieser oder anderer Säuren.

Bei der Ausgangskomponente a3) handelt es sich um Diole, Triole, Tetraole bzw. höherwertige Alkoholkomponenten des Molekulargewichtsbereichs 62 bis 1 200, vorzugsweise 62 bis 200. Geeignet sind z.B. Ethylenglykol, 1,2- und 1,3-Propylenglykol, 1,3-, 1,4-, 2,3-Butandiol, 1,6-Hexandiol, Trimethylhexandiol, Diethylenglykol, Triethylenglykol, hydrierte Bisphenole, 1,4-Cyclohexandiol, 1,4-Cyclohexandimethanol, Neopentylglykol, Tricyclodecandiol, 1,4-Butandiol, Trimethylolpropan, Glycerin, Pentaerythrit, Trimethylpentandiol, Dipentaerythrit, Ditrimethylolpropan, Rizinusöl und Gemische dieser oder anderer mehrwertiger Alkohole.

Ferner kommen auch Polycarbonat-Diole, wie sie z.B. durch Umsetzung von Phosgen mit einem Überschuß von den als Aufbaukomponenten für die Polyesterpolyole genannten niedermolekularen Alkohole erhalten werden können, in Betracht.

Geeignet sind auch Polyesterdiole auf Lactonbasis, wobei es sich um Homo- oder Mischpolymerisisate von Lactonen, bevorzugt um endständige Hydroxylgruppen aufweisende Anlagerungsprodukte von Lactonen an difunktionelle Startermoleküle handelt. Als Lactone kommen z.B. ε-Caprolactam, β-Propiolacton, γ-Butyrolacton und/oderMethyl-ε-Caprolacton sowie deren Gemische in Betracht. Geeignete Starterkompomnenten sind z.B. die vorstehend als Aufbaukomponente für die Polyesterpolyole genannten niedermolekularen zweiwertigen Alkohole. Die entsprechenden Polymerisate des ε-Caprolactons sind besonders bevorzugt. Auch niedere Polyesterdiole oder Polyetherdiole können als Starter zur Herstellung der Lacton-Polymerisate eingesetzt sein. Anstelle der Polymerisate von Lactonen können auch die entsprechenden Hydroxycarbonsäuren eingesetzt werden.

Weiterhin kommen als Polyhydroxylverbindungen vorteilhaft Polyetherpolyole in Betracht. Sie sind insbesondere durch Polymerisation von Ethylenoxid, Propylenoxid, Butylenoxid, Tetrahydrofuran, Styroloxid oder Epichlorhydrin mit sich selbst, z.B. in Gegenwart von BF₃ oder basischen Katalysatoren oder aber durch Anlagerung dieser Verbindungen gegebenfalls im Gemisch oder nacheinander, an Starterkomponenten mit reaktionsfähigen Wasserstoffatomen, wie Alkohole oder Amine, z.B. Wasser, Ethylenglykol, Propan-1,3-diol, 1,2-Bis-(4-hydroxydiphenyl)-propan, Glyzerin, Trimethylolpropan, Pentaerytrit oder Anilin erhältlich.

Die Polyesterdiole und Polyetherdiole können auch als Gemische im Verhältnis 9:1 bis 1:9 eingesetzt werden. Die Härte und der Elastizitätsmodul der Polyurethane läßt sich erhöhen, wenn noch niedermolekulare Diole mit einem Molekulargewicht von etwa 50-500, vorzugsweise von 60-200 g/mol, eingesetzt werden. Als Monomere werden vor allem die Aufbaukomponenten der für die Herstellung von Polyesterpolyolen genannten kurzkettigen Alkandiole eingesetzt, wobei die unverzweigten Diole mit 2-12 C-Atomen und einer geradzahligen Anzahl von C-Atomen bevorzugt werden.

Die Komponente b) besteht aus mindestens einem organischen Polyisocyanat des Molekulargewichtsbereichs 140 bis 1 500, vorzugsweise 168 bis 318, mit der Maßgabe, daß sie zu mindestens 50, vorzugsweise mindestens 75 und besonders bevorzugt zu 100 Gew.-% aus 1-Methyl-2,4-diisocyanatocyclohexan und/oder 1-Methyl-2,6-diisocyanatocyclohexan besteht.

Bei diesem erfindungswesentlichen Diisocyanat bzw. Diisocyanatgemisch handelt es sich vorzugsweise um das zuerst genannte 2,4-isomere Diisocyanat oder um dessen technische Gemische mit bis zu 35 Gew.-%, bezogen auf Gemisch, des letztgenannten 2,6-isomeren Diisocyanats. Bei diesen erfindungswesentlichen Diisocyanaten handelt es sich um bekannte Substanzen. Sie werden z.B. nach der in der DE-A-44 12 327.2 beschriebenen Gasphasenphosgenierung hergestellt.

Neben den letztgenannten erfindungswesentlichen Diisocyanaten kann die Komponente b) auch weitere Polyisocyanate des genannten Molekulargewichtsbereichs enthalten. Beispielhaft genannt seien Hexamethylendiisocyanat (HDI), 1-Isocyanato-3,3,5-trimethyl-5-isocyanatomethyl-cyclohexan (IPDI), 2,4- und/oder 2,6-Diisocyanatotoluol (TDI), 4,4'-Diisocyanatodicyclohexylmethan (H₁₂MDI) und 4,4'-Diisocyanatodiphenylmethan (MDI), 1.4-Butylendiisocyanat (BDI), die Isomeren Xylylendiisocyanate (XDI) sowie deren hydrierte Produkte (H₆-XDI).

Die Polyisocyanatkomponente b) kann auch an sich bekannte Lackpolyisocyanate auf HDI-, IPDI- und/oder TDI-Basis enthalten, z.B. Biurete, Isocyanurate, Urethane oder Allophanate der genannten Polyisocyanate.

Die Komponente c) besteht aus mindestens einer (potentiell) anionischen Verbindung mit mindestens einer gegenüber Isocyanatgruppen reaktionsfähigen Gruppe. Vorzugsweise handelt es sich bei diesen Verbindungen um mindestens eine, vorzugsweise eine oder zwei Hydroxyl oder Aminogruppen aufweisende Carbonsäuren, Sulfonsäuren und Phosphorsäuren oder um Salze derartiger Amino- bzw. Hydroxysäuren. Geeignete derartige Säuren sind beispielsweise 2,2-Bis(hydroxymethyl)alkancarbonsäuren wie Dimethylolessigsäure, 2,2-Dimethylolpropionsäure, 2,2-Dimethylolbuttersäure oder 2,2-Dimethylolpentansäure, Dihydroxybernsteinsäure, Hydroxypivalinsäure oder um Gemische derartiger Säuren. Vorzugsweise wird Dimethylolpropionsäure und/oder Hydroxypivalinsäure verwendet. Bevorzugt ist die Verwendung von gegebenenfalls Ethergruppen aufweisenden Sulfonatdiolen der in US-A-4 108 814 beschriebenen Art als anionische Aufbaukomponente c). Die freien Säuregruppen insbesondere Carboxylgruppen und Sulfonsäuregruppen stellen die vorstehend genannten "potentiell anionischen" Gruppen dar, während es sich bei den durch Neutralisation mit Basen erhaltenen salzartigen Gruppen, insbesondere Carboxylatgruppen und Sulfonatgruppen um die vorstehend angesprochenen "anionischen" Gruppen handelt.

Die gegebenenfalls mitzuverwendende Komponente d) besteht aus mindestens einer nichtionisch-hydrophilen Verbindung, die pro Molekül eine oder zwei gegenüber Isocyanatgruppen reaktionsfähige Gruppen, insbesondere Hydroxyl- oder Aminogruppe aufweist. Die Polyetherketten dieser Verbindungen bestehen zumindest zu 80 Gew.-%, vorzugsweise zu 100 Gew.-% aus Ethylenoxideinheiten, wobei neben diesen, den gemachten Ausführungen entsprechend, auch Propylenoxideinheiten vorliegen können. Geeignete derartige nichtionisch-hydrophile Aufbaukomponenten sind beispielsweise Polyethylenglykole mit Molekulargewichten von 300 bis 6 000 (z.B. ®Carbowax 300, 400, 1 000, 1 500, 2 000, 6 000, von Union Carbide), monofunktionelle Polyethylenglykolmonoalkylether mit Molekulargewichten von 350 bis 5 000 (z.B. ®Breox 350, 550, 750 von BP Chemicals; Polyether LB 25, LB 30, LB 40 von Bayer AG), difunktionelle Polyetheramine, z.B. ®Jeffamine ED 600, ED 900, ED 4 000 von Texaco Chemical Company oder monofunktionelle Polyetheramine, wie z.B. ®Jeffamine M 715, M 1 000, M 2070 von Texaco.

Bei der gegebenenfalls mitzuverwendenden Komponente e) handelt es sich um sonstige mono-, di- und/oder trifunktionelle Substanzen des Molekulargewichts 62 bis 2 500, vorzugweise 62 bis 1 200 mit Hydroxyl- und/oder Aminogruppen wie z.B. Ethylenglykol, Propylenglykol, Trimethylolpropan, Ethanolamin, Diethanolamin, Diethylentriamin, Cyclohexanol, Dodecanol und monofunktionelle, ungesättigte Alkohole (®Ocenol, Henkel). Auch höhermolekulare Polyole, die nicht unter die Gruppen a), c) oder d) fallen, wie beispielsweise Polycarbonatidiole der an sich bekannten Art des genannten Molekulargewichtsbereichs kommen als Komponente e) bzw. als Teil der Komponente e) in Betracht

Die Herstellung der erfindungswesentlichen Polyurethane erfolgt entweder in Substanz oder in 40- bis 99-gew.-%iger organischer Lösung, wobei die Komponenten a), c), d) und e) - gegebenenfalls in dem Lösungsmittel - vorgelegt und bei Temperaturen von 40 bis 140°C mit der Komponente b) derart zur Reaktion gebracht werden, daß nach der Umsetzung praktisch keine freien OH- oder NH-Gruppen mehr nachweisbar sind. Im allgemeinen werden die Mengenverhältnisse im Rahmen der obengemachten Offenbarung hierbei so bemessen, daß ein Äquivalentverhältnis von Isocyanatgruppen zu gegenüber Isocyanatgruppen reaktionsfähigen Gruppen von 3:1 bis 0,9:1 vorliegt, wobei die freien Säuregruppen der Komponente c) nicht in die Berechnung dieses Äquivalentverhältnisses eingehen.

Die Umsetzung erfolgt gegebenfalls in Gegenwart von 0,01 bis 1 Gew.-%, bezogen auf Reaktionsgemisch, an geeigneten Katalysatoren. Falls als Komponente c) nicht bereits salzartige (neutralisierte) Aufbaukomponenten eingesetzt werden erfolgt die zumindest teilweise Neutralisation der eingebauten, zur Salzbildung befähigten Gruppen während der Umsetzung oder vor, während und/oder nach dem Dispergier- bzw. Löseschritt in Wasser durch Zugabe einer Base. Der Neutralisationsgrad liegt hierbei bei 20 bis 100, vorzugsweise 50 bis 100 %, bezogen auf die eingebauten Säuregruppen, insbesondere Carboxylgruppen und Sulfonsäuregruppen. Das gegebenenfalls mitverwendete Lösungsmittel kann vor, während oder nach dem Dispergier- bzw. Löseschritt gewünschtenfalls teilweise oder vollständig destillativ, gegebenenfalls azeotrop und/oder im Vakuum, und/oder unter Verwendung eines Inertgasstroms entfernt werden.

Geeignete Lösungsmittel sind z.B. N-Methylpyrrolidon, Diethylenglykoldimethylether, Methylethylketon, Methylisobutylketon, Aceton, Toluol, Xylol, Butylacetat, Methoxypropylacetat bzw. Gemische dieser oder anderer nicht NCO-reaktiver Lösemittel.

Geeignete Katalysatoren für die Urethanisierungsreaktion sind z.B. tertiäre Amine, wie z.B. Triethylamin, Zinnverbindungen wie z.B. Zinn-II-octoat, Dibutylzinnoxid, Dibutylzinndilaurat und andere gebräuchliche Katalysatoren.

Geeignete Basen sind z.B. Ammoniak, N-Methylmorpholin, Dimethylisopropanolamin, Triethylamin, Dimethylethanolamin, Methyldiethanolamin, Triethanolamin, Morpholin, Tripropylamin, Ethanolamin, Triisopropanolamin, 2-Diethylamino-2-methyl-1-propanol bzw. Gemische dieser und anderer Neutralisationsmittel. Ebenfalls geeignet, jedoch weniger bevorzugt als Neutralisationsmittel, sind Natriumhydroxid, Lithiumhydroxid und Kaliumhydroxid. Bevorzugte Neutralisationsmittel sind Ammoniak und Dimethylethanolamin.

Nach der Urethanisierungsreaktion können zur Erzielung bestimmter Eigenschaften auch geringe Mengen anderer organischer Lösemittel, wie z.B. Ethanol, Propanol, Butanol, Butylglykol, Hexanol, Octanol, Butyldiglykol, Ethyldiglykol, Methyldiglykol und Methoxypropanol, zugesetzt werden. Im Dispergierschritt kann alternativ das Wasser/Neutralisationsmittelgemisch zum Harz, das Wasser zum Harz-/Neutralisationsmittelgemisch, das Harz zum Wasser/Neutralisationsmittelgemisch oder das Harz-/Neutralisationsmittelgemisch zum Wasser gegeben werden. Die Dispergierbarkeit der Harze in Wasser kann gegebenenfalls durch Mitverwendung von externen Emulgatoren, wie z.B. ethoxyliertes Nonylphenol, beim Dispergieren verbessert werden. Der Dispergierschritt wird üblicherweise bei 40 bis 120°C durchgeführt.

In den erfindungsgemäß zu verwendenden Bindemittelkombinationen können die wäßrigen Polyurethandispersionen in Kombination mit Vernetzerharzen B) der bereits oben angesprochenen Art vorliegen.

Bei den als Vernetzerharz in Betracht kommenden hydrophoben Polyisocyanaten mit freien Isocyanatgruppen B1) handelt es sich um beliebige organische Polyisocyanate mit einem NCO-Gehalt von 5 bis 26 % mit aliphatisch, cycloaliphatisch, araliphatisch und/oder aromatisch gebundenen, freien Isocyanatgruppen, die bei Raumtemperatur flüssig sind. Die Polyisocyanatkomponente B1) weist bei 23°C im allgemeinen eine Viskosität von 50 bis 5 000 mPa.s auf. Bevorzugt handelt es sich bei der Polyisocyanatkomponente um Polyisocyanate oder Polyisocyanatgemische mit ausschließlich aliphatisch und/oder cycloaliphatisch gebundenen Isocyanatgruppen einer zwischen 1,8 und 5,0 liegenden (mittleren) NCO-Funktionalität und einer bevorzugten Viskosität bei 23°C von 50 bis 3 000 mPa.s.

Falls erforderlich, können die Polyisocyanate in Abmischung mit geringen Mengen an inerten Lösungsmitteln zum Einsatz gelangen, um die Viskosität auf einen Wert innerhalb der genannten Bereiche abzusenken. Die Menge derartiger Lösungsmittel wird jedoch maximal so bemessen, daß in den letztendlich erhaltenen erfindungsgemäßen Beschichtungsmitteln maximal 20 Gew.-% Lösungsmittel, bezogen auf Bindemittel vorliegt.

Als Zusatzmittel für die Polyisocyanate geeignete Lösungsmittel sind beispielsweise aromatische Kohlenwasserstoffe wie beispielsweise "Solventnaphtha" oder auch Lösungsmittel der bereits oben beispielhaft genannten Art.

Sehr gut geeignet sind beispielsweise "Lackpolyisocyanate" auf Basis von Hexamethylendiisocyanat oder von 1-Isocyanato-3,3,5-trimethyl-5-isocyanatomethylcyclohexan (IPDI) und/oder Bis(isocyanatocyclohexyl)-methan, insbesondere solche, welche ausschließlich auf Hexamethylendiisocyanat basieren. Unter "Lackpolyisocyanaten" auf Basis dieser Diisocyanate sind die an sich bekanten Biuret-, Urethan-, Uretdion-, Allophanat- und/oder Isocyanuratgruppen aufweisenden Derivate dieser Diisocyanate zu verstehen, die im Anschluß an ihre Herstellung in bekannter Weise, vorzugsweise durch Destillation, von überschüssigem Ausgangsdiisocyanat bis auf einen Restgehalt von weniger als 0,5 Gew.-% befreit worden sind. Zu den bevorzugten, erfindungsgemäß zu verwendenden aliphatischen Polyisocyanaten gehören den obengenannten Kriterien entsprechende, Biuretgruppen aufweisende Polyisocyanate auf Basis von Hexamethylendiisocyanat, wie sie beispielsweise nach den Verfahren der US-A 31 24 605, 33 58 010, 39 03 126, 39 03 127 oder 39 76 622 erhalten werden können, und die aus Gemischen von N,N,N"-Tris-(6-isocyanatohexyl)-biuret mit untergeordneten Mengen seiner höheren Homologen bestehen, sowie die den genannten Kriterien entsprechenden cyclischen Trimerisate von Hexamethylendiisocyanat, wie sie gemäß US-PS 43 24 879 erhalten werden können, und die im wesentlichen aus N,N',N"-Tris-(6-isocyanatohexyl)-isocyanurat im Gemisch mit untergeordneten Mengen an seinen höheren Homologen bestehen.

Insbesondere bevorzugt werden den genannten Kriterien entsprechende Gemische aus Uretdion-, Allophanat- und/oder Isocyanuratgruppen aufweisende Polyisocyanate auf Basis von Hexamethylendiisocyanat, wie sie durch katalytische Oligomerisierung von Hexamethylendiisocyanat unter Verwendung von Trialkylphosphinen entstehen. Besonders bevorzugt sind die zuletzt genannten Gemische einer Viskosität bei 23°C von 50 bis, 500 mPa.s und einer zwischen zwischan 2,2 und 5,0 liegenden NCO-Funktionalität.

Bei den erfindungsgemäß ebenfalls geeigneten aromatischen Polyisocyanaten handelt es sich insbesondere um "Lackpolyisocyanate" auf Basis von 2,4-Diisocyanato-toluol oder dessen technischen Gemischen mit 2,6-Diisocyanatotoluol oder auf Basis von 4,4'-Diisocyanatodiphenylmethan bzw. dessen Gemischen mit seinen Isomeren und/oder höheren Homologen. Derartige aromatische Lackpolyisocyanate sind beispielsweise die Urethangruppen aufweisenden Isocyanate wie sie durch Umsetzung von überschüssigen Mengen an 2,4-Diisocyanatotoluol mit mehrwertigen Alkoholen wie Trimethylolpropan und anschließender destillativer Entfernung des nicht umgesetzten Diisocyanat-Überschusses erhalten werden. Weitere aromatische Lackpolyisocyanate sind beispielsweise die Trimerisate der beispielhaft genannten monomeren Diisocyanate, d.h. die entsprechenden Isocyanatoisocyanurate, die ebenfalls im Anschluß an ihre Herstellung vorzugsweise destillativ von überschüssigen, monomeren Diisocyanaten befreit worden sind.

Grundsätzlich möglich ist selbstverständlich auch die Verwendung von unmodifizierten Polyisocyanaten der beispielhaft genannten Art, falls diese den gemachten Ausführungen bezüglich der Viskosität entsprechen. Diese Polyisocyanatkomponente kann im übrigen aus beliebigen Gemischen der beispielhaft genannten Polyisocyanate bestehen.

Bei der Polyisocyanatkomponente B2) handelt es sich um hydrophil modifizierte Polyisocyanate. Hierbei sind vor allem Lackpolyisocyanate der bereits oben angesprochenen Art, insbesondere Isocyanuratgruppen aufweisende Lackpolyisocyanate auf HDI-Basis zu verstehen, die durch Umsetzung mit einer unterschüssigen Menge an einwertigen, hydrophilen Polyetheralkoholen hydrophil modifiziert worden sind. Diese hydrophilierten Polyisocyanate weisen im allgemeinen einen NCO-Gehalt von 4 bis 24 Gew.-% und einen Gehalt an innerhalb von Polyetherketten mit 6 bis 60 Kettengliedern angeordneten Ethylenoxideinheiten von 4 bis 30 Gew.-% auf. Die Herstellung derartiger, hydrophilierter Lackpolyisocyanate, deren hydrophilen Polyetherketten praktisch ausschließlich aus Ethylenoxideinheiten bestehen, ist beispielsweise in US-A 4 663 377 oder in EP-A-540 985 beschrieben.

Bei der Vernetzerkomponente B3) handelt es sich um Gemische der unter B1) und B2) genannten Polyisocyanate. In diesen Gemischen liegt im allgemeinen das Gewichtsverhältnis B1):B2) bei 0,2:1 bis 5:1. "Gemische" bedeutet in diesem Zusammenhang, daß es sich um Gemische von nicht hydrophil modifizierten Polyisocyanaten B1) mit separat hergestellten hydrophilierten Polyisocyanaten B2) handelt. Der Begriff "Gemisch" bezieht sich somit nicht auf den Umstand, daß bei der hydrophilen Modifizierung zur Herstellung der Polyisocyanate B2) im allgemeinen nur ein Teil der zu modifizierenden Polyisocyanate mit der hydrophilen Modifizierungskomponente (einwertigem Polyetheralkohol) abreagiert, so daß im allgemeinen die Komponente B2) selbst ein "Gemisch" aus echtem Umsetzungsprodukt mit nicht modifiziertem Polyisocyanat darstellt.

Bei der Vernetzerkomponente B4) handelt es sich um Polyisocyanate der unter B1) bis B3) genannten Art mit durch Blockierungsmittel für Isocyanatgruppen blockierten Isocyanatgruppen. Geeignete Blockierungsmittel sind beispielsweise einwertige Alkohole wie Methanol, Ethanol, n-Butanol, Cyclohexanol, Benzylalkohol, Oxime wie Acetonoxim, Methylethylketoxim, Lactame wie ε-Caprolactam, H-aktive Verbindungen wie Malonsäurediethylester oder Acetessigsäureethylester, Phenole oder heterocyclische Blockierungsmittel der an sich bekannten Art.

Bei den Vernetzerharzen B5) handelt es sich beispielsweise um wasserverdünnbare bzw. -dispergierbare Melamin- bzw. Harnstoff-Formaldehyd-Kondensationsprodukte, wie sie z.B. bei D.H. Solomon, The Chemistry of Organic Filmformers, S. 235 ff., John Wiley & Sons, Inc., New York, 1967 beschrieben sind. Die Melaminharze können jedoch auch ganz oder teilweise durch andere vernetzende Aminoplaste, wie sie z.B. in "Methoden der organischen Chemie" (Houben-Weyl), Bd. 14/2, Teil 2, 4. Auflage, Georg Thieme Verlag, Stuttgart 1963, S. 319 ff., beschrieben sind, ersetzt werden.

Bei der Vernetzerharzkomponente B6) handelt es sich um Gemische von blockierten Polyisocyanaten B4) mit Melaminharzen B5). Im Falle der Verwendung von derartigen Gemischen liegt das Gewichtsverhältnis B4) : B5) im allgemeinen bei 0,2:1 bis 5:1.

Bevorzugt werden in den erfindungsgemäßen Bindemittelkombinationen Polyisocyanate mit freien Isocyanatgruppen der unter B1) bis B3) genannten Art eingesetzt. Eine hydrophile Modifizierung der Polyisocyanate ist, wie ausgeführt, möglish jedoch nich immer erforderlich, weil das gelöste bzw. dispergierte Polyurethanharz gleichzeitig die Funktion eines Emulgators für das zugesetzte Polyisocyanat übernehmen kann. Diese Funktion kann auch durch Mitverwendung von externen Emulgatoren unterstützt werden.

Vorzugsweise bestehen die Vernetzer B) ausschließlich aus Polyisocyanaten B1) und/oder B2) mit freien Isocyanatgruppen. In diesem Falle und auch in dem besonders bevorzugten Fall der Verwendung von blockierten Polyisocyanaten B4) werden die Mengenverhältnisse der Komponenten A) und B) so bemessen, daß ein NCO/OH-Äquivalentverhältnis, bezogen auf die (gegebenenfalls blockierten) Isocyanatgruppen der Komponente B) und die alkoholische Hydroxylgruppe der Komponente A) von 0,5:1 bis 5:1, vorzugsweise 0,8:1 bis 2:1 resultiert. Die Herstellung der gebrauchsfertigen Bindemittelkombinationen erfolgt durch einfaches Verrühren der Komponenten A) und B) bei Raumtemperatur, gegebenenfalls unter Einsatz geeigneter Misch- bzw. Dispergiergeräte.

Bei der Herstellung der wäßrigen Bindemittelkombinationen werden die beispielhaft genannten Hilfslösungsmittel in solchen Mengen mitverwendet, bzw. im Anschluß an die Herstellung der wäßrigen Polyurethandispersionen A) so weit destillativ entfernt, daß in den letztendlich erhaltenen Bindemittelkombinationen maximal 20 Gew.-%, vorzugsweise maximal 10 Gew.-% an organischen Lösungsmitteln vorliegen.

Vor, während oder nach der Herstellung der wäßrigen Bindemittelkombinationen durch Abmischung der Einzelkomponenten A) und B) und auch im Fall der Herstellung von einkomponentig zu verarbeitenden Bindemitteln können übliche Hilfs- und Zusatzmittel zugesetzt werden, wie z.B. Entschäumungsmittel, Verdikkungsmittel, Verlaufshilfsmittel, Dispergierhilfsmittel, Katalysatoren, Hautverhinderungsmittel, Antiabsetzmittel, Emulgatoren und Biozide.

Die erfindungsgemäßen Schlichtemittel für Glasfasern enthalten als Bindemittel die erfindungsgemäßen Polyurethane in Form von wäßrigen Lösungen oder wäßrigen Dispersionen und können weitere Komponenten wie Emulgatoren, weitere filmbildende Harze, Haftvermittler, Gleitmittel und Hilfsstoffe wie Netzmittel oder Antistatika enthalten. Die Haftvermittler, Gleitmittel und Hilfsstoffe, das Verfahren zur Herstellung, das Verfahren der Beschlichtung und die Nachbearbeitung der Glasfasern ist bekannt und beispielweise in K.L. Loewenstein "The Manufacturing Technology of Continuous Glass Fibres ; Elsevier Scientific Publishing Corp., Amsterdam, London, New York, 1983, beschrieben.

Als weitere filmbildende Harze sind in Wasser dispergierbare, emulgierbare oder lösliche Polymere geeignet. Beispiele sind Polyesterpolymere oder Epoxidgruppen enthaltende Polyesterpolymere, Polyurethane, Acrylpolymere, Vinylpolymere wie Polyvinylacetat, Mischungen solcher Polymere und Copolymere von entsprechenden Monomeren. Die Konzentration der filmbildenden Harze in den erfindungsgemäßen Schlichtemitteln beträgt vorzugsweise 1-12 Gew.-%, besonders bevorzugt 2-8 Gew.-%. Der Anteil des erfindungsgemäßen Polymerharzes an der Gesamtheit der filmbildenden Harze beträgt vorzugsweise 10-100 Gew-.-%, besonders bevorzugt 50-100 Gew.-%.

Als Haftvermittler werden z.B. die bekannten Silan-Haftvermittler verwendet, beispielsweise 3-Aminopropyltrimethoxy- bzw. triethoxysilan, N-(2-Aminoethyl)-3-aminopropyltrimethoxysilan, 3-Glycidylpropyltrimethoxysilan, Vinyltrimethoxysilan, Vinyltriethoxysilan oder 3-Methacryloxypropyltriethoxysilan. Die Konzentration der Silanhaftvermitteler in den erfindungsgemäßen Schlichtemitteln beträgt bevorzugt 0,05 bis 2 Gew.-%, besonders bevorzugt 0,15 bis 0,85 Gew.-%, bezogen auf die gesamte Schlichte.

Die erfindungsgemäßen Schlichtemittel können ein oder mehrere nichtionische und/oder ionische Gleitmittel enthalten, die z.B. aus folgenden Stoffgruppen bestehen können:
Polyalkylenglykolether von Fettalkoholen oder Fettaminen, Polyalkylenglykolether und Glycerinester von Fettsäuren mit 12 bis 18 Kohlenstoffatomen, Polyalkylenglykole, höhere Fettsäureamide mit 12 bis 18 Kohlenstoffatomen von Polyalkylenglykolen und/oder Alkenylaminen, quartäre Stickstoffverbindungen, z.B. ethoxylierte Imidazoliniumsalze, Mineralöe und Wachse. Das oder die Gleitmittel werden bevorzugt in der Gesamtkonzentration zwischen 0,05 und 1,5 Gew.-%, bezogen auf die gesamte Schlichte, angewendet.

Daneben können die erfindungsgemäßen Schlichtemittel noch ein oder mehrere Antistatika, wie z.B. Lithiumchlorid, Ammoniumchlorid, Cr-III-Salze, organische Titanverbindungen, Arylalkylsulfate- oder Sulfonate, Arylpolyglykolethersulfonate oder quartäre Stickstoffverbindungen, enthalten. Die Antistatika werden bevorzugt in Konzentrationen von 0,01 bis 0,8 Gew.-% angewendet.

Die Herstellung der erfindungsgemäßen Glasfaserschlichten ist einfach. In einem geeigneten Mischbehälter wird ca. die Hälfte des insgesamt benötigten Wassers vorgelegt und unter Rühren nacheinander die ggf. erfindungsgemäße Polyurethandispersion, das Gleitmittel und ggf. andere, übliche Hilfsmittel zugesetzt. Danach wird der pH- Wert auf 5-7 eingestellt und nun nach Angaben des Herstellers (UCC, New York ) hergestelltes Hydrolysat eines Trialkoxysilans zugesetzt.

Nach einer weiteren Rührzeit von 15 Minuten ist die Schlichte gebrauchsfertig; ggf. wird der pH- Wert erneut auf 5-7 angeglichen.

Für die beschlichteten Glasfasern sind sowohl die für die Glasseidenfabrikation verwendeten, bekannten Glastypen wie E-, A-, C- und S- Glas als auch die anderen an sich bekannten Erzeugnisse der Glasfaserhersteller geeignet. Unter den genannten Glastypen für die Herstellung von Endlosglasfasern besitzen die E-Glasfasern aufgrund ihrer Alkalifreiheit, hohen Zugfestigkeit und hohen Elastizitätsmodul die größte Bedeutung für die Verstärkung von Kunststoffen.

Die Schlichten können über beliebige Methoden appliziert werden, beispielsweise mit Hilfe geeigneter Vorrichtungen, wie z.B. Sprüh- oder Walzenapplikatoren. Sie werden auf die mit hoher Geschwindigkeit aus Spinndüsen gezogenen Glasfilamente sofort nach derem Erstarren, d.h. noch vor dem Aufwickeln, aufgetragen. Es ist aber auch möglich, die Fasern im Anschluß an den Spinnprozeß in einem Tauchbad zu beschlichten. Die beschlichteten Glasfasern können entweder naß oder trocken beispielsweise zu Schnittglas weiterverarbeitet werden. Die Trocknung des End- oder Zwischenproduktes findet bei Temperaturen von 90 bis 150°C statt. Unter Trocknung ist dabei nicht allein die Entfernung von anderen flüchtigen Bestandteilen zu verstehen, sondern z.B. auch das Festwerden der Schlichtebestandteile. Erst nach beendeter Trocknung hat sich die Schlichte in die fertige Überzugsmasse verwandelt. Der Anteil der Schlichte beträgt, bezogen auf die beschlichteten Glasfasern, bevorzugt 0,1-2 Gew.-%, besonders bevorzugt 0,3 bis 1,0 Gew.-%.

Als Matrixpolymere können eine Vielzahl von Thermoplasten bzw. duroplastisch härtbaren Polymeren verwendet werden. Beispielsweise sind als thermoplastische Polymere geeignet: Polyolefine wie Polyethylen oder Polypropylen, Polyvinylchlorid, Polymerisate wie Styrol/Acrylniril-Copolymere, ABS, Polymethylmethacrylat oder Polyoxymethylen, aromatische und/oder aliphatische Polyamide wie Polyamid-6 oder Polyamid-6,6, Polykondensate wie Polycarbonat, Polyethylenterephthalat, flüssig-kristalline Polyarylester, Polyarylenoxid, Polysulfon, Polyarylensulfid, Polyarylsulfon, Polyethersulfon, Polyarylether oder Polyetherketon oder Polyaddukte wie Polyurethane. Als duroplastisch härtbare Polymere seien beispielsweise genannt: Epoxidharze, ungesättigte Polyesteraharze, Phenolharze, Aminharze, Polyurethanharze, Polyisocyanurate, Epoxid/Isocyanurat-Kombinationsharze, Furanharze, Cyanuratharze und Bismaleinimidharze.

Die so erhaltenen erfindungsgemäßen Beschichtungsmittel eignen sich weiterhin für alle Einsatzgebiete, in denen lösemittelhaltige, lösemittelfreie oder andersartige wäßrige Anstrich- und Beschichtungssysteme mit einem erhöhten Eigenschaftsprofil Verwendung finden, z.B. Beschichtung praktisch aller mineralischer Baustoffoberflächen wie Kalk- und/oder Zement gebundene Putze, Gips enthaltende Oberflächen, Faser-Zement-Baustoffe, Beton; Lackierung und Versiegelung von Holz und Holzwerkstoffen wie Spanplatten, Holzfaserplatten sowie Papier, Lackierung und Beschichtung metallischer Oberflächen; Beschichtung bitumenhaltiger Straßenbeläge, Lackierung und Versiegelung diverser Kunststoffoberflächen. Bei den unter erfindungsgemäßer Verwendung der erfindungsgemäßen Bindemittelkombinationen hergestellten Lacken bzw. Beschichtungsmitteln handelt es sich um solche der unterschiedlichsten Art, wie beispielsweise Grundierungen, Füller, pigmentierte oder transparente Decklacke z.B. im Bereich der Industrielackierung, Automobil-Erst- und -Reparaturlackierung.

Die Herstellung der Beschichtungen kann insbesondere nach den unterschiedlichsten Spritzverfahren wie beispielsweise Luftdruck-, Airless- oder Elektrostatik-Spritzverfahren unter Verwendung von Ein- oder gegebenenfalls Zweikomponenten-Spritzanlage erfolgen. Die erfindungsgemäß herzustellenden und zu verwendenden Lacke und Beschichtungsmassen können beispielsweise durch Streichen, Rollen oder Rakeln appliziert werden, aber auch nach den bekannten Spritzverfahren.

### Beispiele

In den nachfolgenden Beispielen beziehen sich alle Prozentangaben, falls nicht anders angegeben, auf Gewichtsprozente. In allen Beispielen wurde unter Inertgas (Stickstoff) gearbeitet. Alle Angaben bezüglich der Hydroxyl- und Säurezahlen beziehen sich auf mg KOH/g Substanz.

### Beispiel 1:

### Herstellung einer anionischen, Sulfonatgruppen und Polyoxyethylenoxyd enthaltenden wäßrigen Polyurethandispersion

| **Einsatzmengen Prepolymer:** | |
|---|---|
| 2352,0 g (1,3835 Mol) | Hexandiol-neopentylglykol-polyadipat vom Molgew. 1700 |
| 89,3 g (0,0400 Mol) | n-Butanol-gestarteter Polyoxyethylen-polyoxypropylen-polyether vom Molgewicht 2250 |
| 262,5 g (1,5625 Mol) | Hexamethylendiisocyanat |
| 296,2 g (1,5625 Mol) | 1-Methyl-2,4-diisocyanatocyclohexan (80/20 Regioisomerengemisch) |
| 5690 ml | Aceton |

| **Einsatzmengen Verlängerung: (Berechnet auf 4,7 % NCO)** | |
|---|---|
| Lösung aus | |
| 160,0 g (0,9410 Mol) | Isophorondiamin |
| 15,7 g (0,3137 Mol) | Hydrazinhydrat |
| 63,5 g (0,1620 Mol) | einer 50%igen wässrigen Lösung des Natriumsalzes von 2-Aminoethyl-ß-aminoethansulfonsäure in 478 ml demineralisiertem Wasser |
| 4093 ml | demineralisiertes Wasser |

### Durchführung:

Entwässerte Polyole werden vorgelegt und unter Rühren bei Raumtemperatur mit dem Isocyanatgemisch versetzt. Man erwärmt das Reaktionsgemisch auf 100°C. Es wird 1 1/4 Stunden bei 100°C-105°C gehalten und dann bestimmt man den NCO-Gehalt.

Sollwert: 4,4 +/-0,3%.
Das Prepolymer wird nach dem Erreichen des NCO-Gehaltes 40%ig in Aceton eingelöst.
Nach Abkühlen auf 40°C wird unter guter Rührung mit der Verlängererlösung versetzt und 15 Minuten nachgerührt. Im Anschluß wird innerhalb ca. 3 Minuten mit Wasser dispergiert.
Nach dem Abdestillieren des Acetons erhält man eine feinteilige homogene Dispersion die anschließend filtriert und abgefüllt wird.

**Daten:**
NCO/OH Kennzahl: 223
% NCO (berechnet): 4,8
% NCO (gefunden): 4,7
% Verlängerung: 85
% Eox : 2,3
%FK: 40
% Sulfonat: 0.4
pH-Wert: 6,1

### Beispiel 2: (Vergleichsbeispiel)

Man arbeitet völlig analog Beispiel 1, verwendet jedoch als Polyisocyanatgemisch eine equimolare Mischung aus Hexamethylendiisocyanat und Isophorondiisocyanat.

**Daten:**
NCO/OH Kennzahl: 222
% NCO (berechnet): 4,8
% NCO (gefunden): 4,7
% Verlängerung: 85
% Eox : 2,3
% FK : 40
% Sulfonat: 0.4
pH-Wert: 6,1

### Beispiel 3:

**Herstellung einer anionischen, Carboxylatgruppen und Polyoxyethylenoxyd enthaltenden wäßrigen Polyurethandispersion**

| **Einsatzmengen Prepolymer:** | |
|---|---|
| 1881,6 g (0,9408 Mol) | Polypropylenglykol vom Molekulargewicht 2000 |
| 83,6 g (0,7402 Mol) | ε-Caprolactam |
| 41,2 g (0,3068 Mol) | Dimethylolpropionsäure |
| 244,3 g (0,0961 Mol) | n-Butanol-gestarteter Polyoxyethylen-polyoxypropylen-polyether vom Molgewicht 2250 |
| 55,7 g (0,6193 Mol) | 1.4-Butandiol |
| 696,3 g (3,6725 Mol) | 1-Methyl-2,4-diisocyanatocyclohexan (80/20 Regioisomerengemisch) |

| **Einsatzmengen Verlängerung: (Berechnet auf 3,9 % NCO)** | |
|---|---|
| 27,3 g (0,3068 Mol) Lösung aus | N,N-Dimethylaminoethanol (Versalzung) |
| 160,0 g (0,9410 Mol) | Isophorondiamin |
| 15,7 g (0,3137 Mol) | Hydrazinhydrat in |
| 754 ml | demineralisiertem Wasser |
| 4010 ml | demineralisiertes Wasser |

### Durchführung:

Entwässerter Polyether DE-3600, Polyether LB-25, Caprolactam, 1.4-Butandiol und Dimethylolpropionsäure werden vorgelegt und unter Rühren bei Raumtemperatur mit Isophorondiisocyanat versetzt. Man erwärmt das Reaktionsgemisch auf 100°C. Es wird 3 Stunden bei 100°C-105°C gehalten und dann bestimmt man den NCO-Gehalt.
Sollwert: 3,8+/-0,1%.
Nach Abkühlen auf 80°C wird unter guter Rührung mit N,N-Dimethylaminoethanol versetzt und sofort im Anschluß daran innerhalb ca. 2-3 Minuten mit Wasser dispergiert. Danach läßt man die Verlängererlösung in ca. 3 Min. zulaufen. Die so erhaltene Dispersion wird noch ca. 3 Stunden zur Abkühlung auf Raumtemperatur nachgerührt, anschließend filtriert und abgefüllt.

**Daten:**
NCO/OH Kennzahl: 161
% NCO (berechnet): 3,9
% NCO (gefunden): 3,8 (+/-0.1)
% Verlängerung: 90
% Eox : 5,7
% FK : 40
% Carboxylat: 0.43
pH-Wert: 6,8

### Beispiel 4:

### Herstellung einer nichtionischen, Polyoxyethylenoxyd enthaltenden wäßrigen Polyurethandispersion

| **Einsatzmengen Prepolymer:** | |
|---|---|
| 224,1 g (0,2668 Mol) | Hexandiol-polyadipat vom Molgewicht 840 |
| 71,4 g (0,0320 Mol) | n-Butanol-gestarteter Polyoxyethylen-polyoxypropylen-polyether vom Molgewicht 2250 |
| 8,3 g (0,1334 Mol) | Ethylenglykol |
| 87,9 g (0,4638 Mol) | 1-Methyl-2,4-diisocyanatocyclohexan (80/20 Regioisomerengemisch) |
| 1 Tropfen | Zinnoctoat |
| 759 ml | Aceton |
| 11,0 g (0,1058 Mol) | Diethanolamin |
| 767 ml | demineralisiertem Wasser |

### Durchführung:

Entwässerte Polyole werden vorgelegt und unter Rühren bei 45°C mit dem Isocyanat versetzt. Man erwärmt das Reaktionsgemisch auf 100°C. Es wird 3 Stunden bei 100°C-105°C gehalten (nach 2 Stunden katalysiert man) und dann bestimmt man den NCO-Gehalt.
Sollwert: 1,0 +/-0,1%.
Das Prepolymer wird nach dem Erreichen des NCO-Gehaltes 40%ig in Aceton eingelöst.

Nach Abkühlen auf 30°C wird unter guter Rührung mit dem Diethanolamin versetzt und 10 Minuten nachgerührt. Im Anschluß wird innerhalb ca. 3 Minuten mit Wasser dispergiert.
Nach dem Abdestillieren des Acetons erhält man eine feinteilige homogene Dispersion die anschließend filtriert und abgefüllt wird.

**Daten:**
NCO/OH Kennzahl: 111
% NCO (berechnet): 1,02
% NCO (gefunden): 1,05
Diethanolamin bez. auf gef. NCO-Gehalt: 100 Mol %
% Eox : 14,9
% FK : 35
pH-Wert: 8
OH-Gruppengehalt: 0,9%

### Beispiel 5

### Herstellung einer anionischen, Sulfonatgruppen und Polyoxyethylenoxyd enthaltenden wäßrigen Polyurethandispersion

244,8 Teile eines Polyesters aus Adipinsäure sowie Hexandiol-1,6 und 2,2-Dimethylpropandiol-1,3 (im Molverhältnis 0,65:0,35) der OH-Zahl 66 werden mit 18,0 Teilen eines monofunktionellen Polyetheralkohols der OH-Zahl 26 (hergestellt durch Alkoxylierung von n-Butanol unter Verwendung eines Gemisches aus 83 % Ethylenoxid und 17 % Propylenoxid) und 25,8 Teilen eines propoxylierten Adduktes aus 2-Butandiol-1,4 und NaHSO₃ (Molekulargewicht: 430) vermischt und bei 50 °C mit 35,8 Teilen eines Gemisches aus 80 % 1-Methyl-2,4-diisocyanatocyclohexan, und 20 % 1-Methyl-2,6-diisocyanatocyclohexan ("H₆TDI") und 33,6 Teilen 1,6-Diisocyanatohexan (HDI) versetzt und bei 75 °C so lange umgesetzt, bis der NCO-Gehalt des resultierenden Prepolymeren auf 4,2 % gefallen ist.

Man kühlt auf 70 °C ab und verrührt mit 33,4 Teilen eines aus Methylisobutylketon und 3-Aminomethyl-3,5,5-trimethyl-cyclohexylamin (Isophorondiamin) hergestellten Bisketimins.

Unter gutem Rühren läßt man eine Mischung aus 605,9 Teilen entmineralisiertem, auf 50°C vorgewärmtem Wasser und 1,5 Teilen Hydrazinhydrat zulaufen und rührt 3 Stunden bei 70°C nach. Die entstandene blaustichige Dispersion hat einen Feststoffgehalt von 39 % und eine Viskosität von 100 mPas (23°C).

### Beispiel 6

### Herstellung einer anionischen, Sulfonatgruppen und Polyoxyethylenoxyd enthaltenden wäßrigen Polyurethandispersion

246,5 Teile eines Polyesters aus Adipinsäure sowie Hexandiol-1,6 und 2,2-Dimethylpropandiol-1,3 (im Molverhältnis 0,65:0,35) der OH-Zahl 66 werden mit 17,1 Teilen eines monofunktionellen Polyetheralkohols der OH-Zahl 26 (hergestellt durch Alkoxylierung von n-Butanol unter Verwendung eines Gemisches aus 83 % Ethylenoxid und 17 % Propylenoxid) und 32,3 Teilen eines propoxylierten Adduktes aus 2-Butandiol-1,4 und NaHSO₃ (Molekulargewicht: 430) vermischt und bei 50 °C mit 51,9 Teilen eines Gemisches aus 80 % 1-Methyl-2,4-diisocyanatocyclohexan, und 20 % 1-Methyl-2,6-diisocyanatocyclohexan ("H₆TDI") und 21,0 Teilen 1,6-Diisocyanathexan (HDI) versetzt und bei 75 °C so lange umgesetzt, bis der NCO-Gehalt des resultierenden Prepolymeren auf 4,2 % gefallen ist.

Anschließend wird dispergiert, indem man das 80 °C heiße Prepolymer unter gutem Rühren zu 500 Teilen entmineralisiertem Wasser, das eine Temperatur von 50 °C hat, zulaufen läßt. Es wird noch eine Mischung aus 1,8 Teilen Hydrazin-Hydrat, 12,9 Teilen 2-Methyl-pentamethylendiamin (Dytek A) und 89,7 Teilen entmineralisiertem Wasser zugetropft und 2 Stunden bei 70 °C nachgerührt. Die resultierende blaustichige Dispersion hat einen Feststoffgehalt von 40 % und eine Viskosität von 60 mPas (23 °C).

### Die Herstellung der erfindungsgemäßen Glasfaserschlichten

In einem geeigneten Mischbehälter wird ca. die Hälfte des insgesamt benötigten Wassers vorgelegt (47 kg) und unter Rühren nacheinander 5 kg der erfindungsgemäßen Polyurethandispersion, 0.5 kg Gleitmittel Breox 50-A140 (Fa. BP-Chemicals) und ggf. andere, übliche Hilfsmittel zugesetzt. Danach wird der pH- Wert auf 5-7 eingestellt und nun nach Angaben des Herstellers (UCC, New York) hergestelltes Hydrolysat von 0.5 kg 3-Aminopropyl-triethoxysilans in 47 kg Wasser zugesetzt.

Nach einer weiteren Rührzeit von 15 Minuten ist die Schlichte gebrauchsfertig; ggf. wird der pH- Wert erneut auf 5-7 angeglichen.

Mit dieser erfindungsgemäßen Schlichte werden in üblicher und bekannter Weise Glasfasern mit einem Durchmesser von 9-11 µm hergestellt, geschnitten und getrocknet.

Aus 70 Teilen Polyamid 6 (BKV, Bayer AG) und 30 Teilen dieser chopped strands (erfindungsgemäß beschlichtete, geschnittene Glasfasern der Länge 4.5 mm) werden im Extruder bei 250°C Normprüfkörper hergestellt und die mechanischen Daten gemessen.

Die folgende Tabelle gibt Auskunft über die mittlere Teilchengröße und die **T**eilchen**g**rößen**v**erteilung (TGV, hier als sogenannte DV-0.9-Werte angegeben) der erfindungsgemäßen Bindemittel für Glasfasern, über die Auftragsmenge der Schlichte, das Schüttvolumen der daraus hergestellten Glasfasern sowie über die gemessenen Werte für Zugfestigkeit, Biegefestigkeit und Schlagzähigkeit.

Die Tabelle informiert weiterhin über die Eigenschaftsverbesserungen bezogen auf das Vergleichsbeispiel ( Beispiel 2 ) .

| **Prüfergebnisse** **PUR-Dispersionen / Glasfasern / GF-verstärkter Kunststoff** | | | | | | | | |
|---|---|---|---|---|---|---|---|---|
| Produkt | Festkörper [%] | TG [nm] | TGV DV (0.9)* [µm] | Schlichte Auftrag [%] | Schütt-Volumen [l/kg] | Zugfestigkeit¹ [MPa] | Biegefestigkeit² [MPa] | Schlagzähigkeit³ [KJ/m²] |
| Bsp. 1 | 40 | 207 | 0,51 | 0,53 | 1,95 | 185 | 283 | 66,1 |
| Bsp. 2 | 40 | 228 | 0,54 | 0,60 | 1,87 | 180 | 272 | 64,3 |
| Bsp. 3 | 40 | 173 | 0,68 | 0,45 | n.gem. | 208 | 304 | 59,9 |
| Bsp. 4 | 35 | 208 | 0,76 | 0,51 | 1,90 | 189 | 287 | 67,0 |
| Bsp. 5 | 39 | 111 | 0,49 | 0,50 | 1,65 | 182 | 273 | 58,1 |
| Bsp. 6 | 40 | 173 | 0,51 | 0,54 | 1,75 | 181 | 274 | 59,0 |

| | | | | | | | | |
|---|---|---|---|---|---|---|---|---|
| * ein DV-0.9-Wert von 10 µm bedeutet, daß 90 % aller Teilchen volumenbezogen kleiner als 10 µm sind. Der Zahlenwert gibt also Auskunft über die kumulierte Volumengrößenverteilung. Vgl. Handbuch Mastersizer E, Fa. Malvern, D-71083 Herrenberg, Germany. | | | | | | | | |
| ¹⁾ gemäß DIN 53 455 | | | | | | | | |
| ²⁾ gemäß DIN 53 457 | | | | | | | | |
| ³⁾ gemäß DIN ISO 180 | | | | | | | | |

## Patentansprüche

1. 20 bis 60 gew.-%ige wässrige Polyurethandispersionen mit einer Viskosität bei 23°C von 10 bis 20 000 mPa.s und einem pH-Wert von 5,5 bis 8,5 mit einem Molekulargewicht Mw von 5000 bis 500 000 und einem Gehalt an Urethangruppen (berechnet als -NHCO-O-, Molekulargewicht = 59) von 2,5 bis 15 Gew.-% und einer Hydroxylzahl von <20mg KOH/g, wobei das Polyurethan ein Umsetzungsprodukt darstellt von
a) 50 bis 91 Gew.-% einer Polyhydroxylkomponente, bestehend aus mindestens einer Polyhydroxylkomponente des Hydroxylzahlbereichs 15 bis 350,
b) 7 bis 45 Gew.-% einer Polyisocyanat-Komponente, bestehend zumindest zu 50 Gew.-% aus 1-Methyl-2,4- und/oder -2,6-diisocyanatocyclohexan und zum Rest aus anderen organischen Polyisocyanaten des Molekulargewichtsbereichs 140 bis 1 500
und
c) 0 bis 12 Gew.-% einer (potentiell) anionischen Aufbaukomponente, bestehend aus mindestens einer Verbindung mit mindestens einer gegenüber NCO-Gruppen reaktionsfähigen Gruppe und mindestens einer, gegebenenfalls zumindest teilweise neutralisiert vorliegenden, zur Salzbildung befähigten Gruppe, wobei Carboxylat modifizierte wässrige Polyurethane ausgenommen sind und
d) 0 bis 15 Gew.-% einer nichtionisch-hydrophilen Aufbaukomponente, bestehend aus mindestens einer im Sinne der Isocyanat-Additionsreaktion mono- bis tetrafunktionellen, mindestens eine hydrophile Polyetherkette aufweisenden Verbindung und/oder gegebenenfalls
e) 0 bis 30 Gew.-% an anderen, von den Komponenten a), c) und d) verschiedenen Aufbaukomponenten mit gegenüber Isocyanatgruppen reaktionsfähigen Wasserstoffatomen des Molekulargewichtsbereichs 62 bis 2 500,
wobei sich die genannten Prozentangaben zu 100 ergänzen, jedoch unter der Vorraussetzung dass entweder c) oder d) nicht Null sein kann.

2. Wässrige Polyurethandispersion gemäß Anspruch 1, **dadurch gekennzeichnet, dass** das darin enthaltene Polyurethan das Umsetzungsprodukt darstellt aus
a) 68 bis 88 Gew.-% einer Polyhydroxylverbindung,
b) 10 bis 30 Gew.-% einer Polyisocyanat-Komponente, bestehend zumindest zu 50 Gew.-% aus 1-Methyl-2,4- und/oder -2,6-diisocyanatocyclohexan und zum Rest aus anderen organischen Polyisocyanaten des Molekulargewichtsbereichs 140 bis 1 500 und
c) 0 bis 8 Gew.-% einer (potentiell) anionischen Aufbaukomponente, bestehend aus mindestens einer Verbindung mit mindestens einer gegenüber NCO-Gruppen reaktionsfähigen Gruppe und mindestens einer, gegebenenfalls zumindest teilweise neutralisiert vorliegenden, zur Salzbildung befähigten Gruppe wobei Carboxylat modifizierte wässrige Polyurethane ausgenommen sind
und
d) 0 bis 15 Gew.-% einer nichtionisch-hydrophilen Aufbaukomponente, bestehend aus mindestens einer im Sinne der Isocyanat-Additionsreaktion mono- bis tetrafunktionellen, mindestens eine hydrophile Polyetherkette aufweisenden Verbindung
und/oder gegebenenfalls
e) 0 bis 10Gew.-% an anderen, von den Komponenten a), c) und d) verschiedenen Aufbaukomponenten mit gegenüber Isocyanatgruppen reaktionsfähigen Wasserstoffatomen des Molekulargewichtsbereichs 62 bis 1200,
wobei sich die genannten Prozentangaben zu 100 ergänzen, jedoch unter der Vorraussetzung dass entweder c) oder d) nicht Null sein kann.

3. Wässrige Bindemittelkombinationen bestehend im wesentlichen aus
A) einer wässrigen Dispersion eines Polyurethans gemäß Anspruch 1 und
B) einer Härterkomponente, ausgewählt aus der Gruppe bestehend aus
B1) hydrophoben Polyisocyanaten mit einer Viskosität bei 23°C von 25 bis 5 000 mPa.s und einem NCO-Gehalt von 5 bis 26 Gew.-%,
B2) eingebaute hydrophile Polyetherketten enthaltenden, hydrophilen Polyisocyanaten mit einem NCO-Gehalt von 4 bis 24 Gew.-%,
B3) Gemischen der unter B1) und B2) genannten Polyisocyanate,
B4) ggf. in Wasser dispergierte Polyisocyanate der unter B1) bis B3) genannten Art mit mit Blockierungsmitteln für Isocyanatgruppen blockierten Isocyanatgruppen,
B5) Aminovernetzerharzen und
B6) Gemischen der unter B4) und B5) genannten Vernetzerharzen.

4. Verwendung der wässrigen Polyurethandispersionen gemäß Anspruch 1 als Bindemittel für Glasfaserschlichten.

## Claims

1. 20 to 60 wt % of aqueous polyurethane dispersions with a viscosity at 23 °C of 10 to 20 000 mPa.s and a pH value of 5.5 to 8.5 with a molecular weight Mw of 5 000 to 500 000 and a content in urethane groups (calculated as -NHCO-O-, molecular weight = 59) of 2.5 to 15 wt % and a hydroxyl number of < 20 mg KOH/g, wherein the polyurethane represents a reaction product of
a) 50 to 91 wt % of a polyhydroxyl component consisting of at least one polyhydroxyl component in the hydroxyl value range 15 to 350,
b) 7 to 45 wt % of a polyisocyanate component consisting at least 50 wt % of 1-methyl-2,4-and/or -2,6-diisocyanatocyclohexane and for the remainder of other organic polyisocyanates in the molecular weight range 140 to 1 500,
and
c) 0 to 12 wt % of a (potentially) anionic structural component consisting of at least one compound containing at least one group reactive to NCO groups and at least one group optionally present at least partly neutralized and capable of salt formation, wherein carboxylate-modified aqueous polyurethanes are excluded, and
d) 0 to 15 wt % of a nonionic-hydrophilic structural component consisting of at least one compound which is mono- to tetrafunctional in accordance with the isocyanate addition reaction and comprises at least one hydrophilic polyether chain
and/or optionally
e) 0 to 30 wt % of other structural components different from components a), c) and d) and containing hydrogen atoms in the molecular weight range 62 to 2 500 which are reactive to isocyanate groups,
wherein the above-mentioned percentages add up to 100, but on condition that either c) or d) cannot be zero.

2. Aqueous polyurethane dispersion according to claim 1, **characterised in that** the polyurethane contained therein represents the reaction product of
a) 68 to 88 wt % of a polyhydroxyl compound,
b) 10 to 30 wt % of a polyisocyanate component consisting of at least 50 wt % of 1-methyl-2,4- and/or -2,6-diisocyanatocyclohexane and for the remainder of other organic polyisocyanates in the molecular weight range 140 to 1 500
and
c) 0 to 8 wt % of a (potentially) anionic structural component consisting of at least one compound containing at least one group reactive to NCO groups and at least one group optionally present at least partly neutralized and capable of salt formation, wherein carboxylate-modified aqueous polyurethanes are excluded,
and
d) 0 to 15 wt % of a nonionic-hydrophilic structural component consisting of at least one compound which is mono- to tetrafunctional in accordance with the isocyanate addition reaction and comprises at least one hydrophilic polyether chain
and/or optionally
e) 0 to 10 wt % of other structural components different from components a), c) and d) and containing hydrogen atoms in the molecular weight range 62 to 1 200 which are reactive to isocyanate groups,
wherein the above-mentioned percentages add up to 100, but on condition that either c) or d) cannot be zero.

3. Aqueous binder combinations consisting in the main of
A) an aqueous dispersion of a polyurethane according to claim 1 and
B) a hardener component selected from the group consisting of
B1) hydrophobic polyisocyanates with a viscosity at 23 °C of 25 to 5 000 mPa.s and an NCO content of 5 to 26 wt %,
B2) hydrophilic polyisocyanates containing built-in hydrophilic polyether chains and with an NCO content of 4 to 24 wt %,
B3) mixtures of the polyisocyanates mentioned under B1) and B2),
B4) polyisocyanates optionally dispersed in water of the kind mentioned under B1) to B3) with isocyanate groups blocked with blocking agents for isocyanate groups,
B5) amino crosslinking resins and
B6) mixtures of the crosslinking resins mentioned under B4) and B5).

4. Use of the aqueous polyurethanes according to claim 1 as binders for glass fibre sizes.

## Revendications

1. Dispersions aqueuses de 20 à 60% en poids de polyuréthanne, avec une viscosité à 23°C allant de 10 à 20 000 mPa.s et un pH de 5,5 à 8,5 avec un poids moléculaire Mw allant de 5000 à 500 000 et une teneur en radicaux uréthanne (calculés comme -NHCO-O-, poids moléculaire = 59) de 2,5 à 15% en poids et un indice d'hydroxyle < 20 mg KOH/g, où le polyuréthanne est un produit de réaction de :
a) 50 à 91% en poids d'un composant polyhydroxylé, consistant en au moins un composant polyhydroxylé d'intervalle d'indice d'hydroxyle allant de 15 à 350,
b) 7 à 45% en poids d'un composant polyisocyanate, consistant en au moins 50% en poids de 1-méthyl-2,4- et/ou -2,6-diisocyanatocyclohexane, le reste étant d'autres polyisocyanates organiques d'intervalle de poids moléculaire allant de 140 à 1500, et
c) 0 à 12% en poids d'un composant d'élaboration (potentiellement) anionique, consistant en au moins un composé avec au moins un radical capable de réagir avec les radicaux NCO et au moins un radical susceptible de former un sel, le cas échéant au moins partiellement présent sous forme neutralisée, où on exclut les polyuréthannes modifiés par un carboxylate, et
d) 0 à 15% en poids d'un composant d'élaboration hydrophile non ionique, consistant en au moins un composé présentant au moins une chaîne polyéther hydrophile, mono- à tétrafonctionnelle dans le sens d'une réaction d'addition sur un isocyanate, et/ou le cas échéant,
e) 0 à 30% en poids d'autres composants d'élaboration, différents des composants a), c) et d), avec des atomes d'hydrogène réactifs avec les radicaux isocyanate, d'intervalle de poids moléculaire allant de 62 à 2500,
où les données en pourcentage indiquées s'additionnent pour faire 100, mais avec la condition que c) ou d) ne peut pas être nul.

2. Dispersions aqueuses de polyuréthanne suivant la revendication 1, **caractérisées en ce que** le polyuréthanne y présent est le produit de réaction de :
a) 68 à 88% en poids d'un composé polyhydroxylé,
b) 10 à 30% en poids d'un composant polyisocyanate, consistant en au moins 50% en poids de 1-méthyl-2,4- et/ou -2,6-diisocyanatocyclohexane, le reste étant d'autres polyisocyanates organiques d'intervalle de poids moléculaire allant de 140 à 1500, et
c) 0 à 8% en poids d'un composant d'élaboration (potentiellement) anionique, consistant en au moins un composé avec au moins un radical capable de réagir avec les radicaux NCO et au moins un radical susceptible de former un sel, le cas échéant au moins partiellement présent sous forme neutralisée, où on exclut les polyuréthannes modifiés par un carboxylate, et
d) 0 à 15% en poids d'un composant d'élaboration hydrophile non ionique, consistant en au moins un composé présentant au moins une chaine polyéther hydrophile, mono- à tétrafonctionnelle dans le sens d'une réaction d'addition sur un isocyanate, et/ou le cas échéant,
e) 0 à 10% en poids d'autres composants d'élaboration, différents des composants a), c) et d), avec des atomes d'hydrogène réactifs avec les radicaux isocyanate, d'intervalle de poids moléculaire allant de 62 à 1200,
où les données en pourcentage indiquées s'additionnent pour faire 100, mais avec la condition que c) ou d) ne peut pas être nul.

3. Compositions aqueuses de liant, consistant essentiellement en
A) une dispersion aqueuse d'un polyuréthanne suivant la revendication 1, et
B) un composant durcissant, choisi parmi le groupe consistant en :
B1) des polyisocyanates hydrophobes avec une viscosité à 23°C de 25 à 5000 mPa.s et une teneur en NCO de 5 à 26% en poids,
B2) des polyisocyanates hydrophiles, contenant des chaines polyéther hydrophiles incorporées, avec une teneur en NCO allant de 4 à 24% en poids,
B3) des mélanges des polyisocyanates cités en B1) et B2),
B4) des polyisocyanates le cas échéant dispersés dans l'eau, des types indiqués sous B1) à B3), avec des radicaux isocyanate bloqués avec des agents de blocage pour les radicaux isocyanate,
B5) des résines amino de réticulation, et
B6) des mélanges des résines de réticulation indiquées en B4) et B5).

4. Utilisation des dispersions aqueuses de polyuréthanne suivant la revendication 1, comme liant pour produits d'encollage de fibres de verre.
